# EUROPEAN PATENT SPECIFICATION

(11) **EP 0 430 008 B1**
(45) Date of publication and mention of the grant of the patent: **07.09.1994**
(21) Application number: 90122059.0
(22) Date of filing: 19.11.1990
(51) Int. Cl.: B01D 46/12, B01D 46/04

(54) **Filter unit**
Filtereinheit
Unité de filtration

(30) Priority: 29.11.1989 IT 2216989
(43) Date of publication of application: 05.06.1991
(73) Proprietor: BLACKHAWK ITALIA S.r.l., I-37066 Sommacampagna (Verona) (IT)
(72) Inventor: BLACKHAWK ITALIA S.r.l., I-37066 Sommacampagna (Verona) (IT)
(74) Representative: Giambrocono, Alfonso, Dr. Ing.

(56) References cited:
- EP-A- 0 087 191
- WO-A-82/02675
- DE-A- 2 815 960

## Description

This invention relates to a filter unit, the component parts of which are combined and formed in such a manner as to provide it with particularly useful characteristics.

The invention finds particular application in working environments using dust-generating machines, such as orbital tools used for sanding filler material in vehicle body shops before painting.

As is well known to the expert of the art, current high-efficiency filter units require large-area filtering surfaces, resulting in various drawbacks including the fact that the cleaning means necessarily require a certain power, a large installation space is required which must not however result in disturbance to the positioning of the various operating machines, a high cost is involved, etc.

For example, EP-A-0087191 and DE-A-2815960 disclose filter units having at least two compartments each provided with filtering hoses extending from a horizontal partition dividing the filter shell into a lowermost portion communicating with an inlet pipe for air with dust to be filtered off, and into an uppermost portion forming separate chambers communicating with a suction pipe through respective valves.

There is provided a source of compressed air communicating with the above mentioned chambers through pipes having shutoff valves which are opened one at a time to feed compressed air into one of the chambers when and while the valve through which said chamber communicates with the suction pipe is closed. In this way the direction of the flow of air passing through the filtering hoses of the involved compartment is reversed and the dust layer deposited on the filter hoses is detached therefrom.

The above filter units are therefore of large size, require the use and selective actuation of a large number of valves and consequently they are expensive. A similar filter unit in which the cleaning of the filter tubes is carried out by shakers means having the form of an impact mechanism driven by an electric motor is disclosed in WO-A-8 202 675.

An object of the present invention is to provide a filter unit of the aforesaid type which totally overcomes the stated drawbacks of conventional filter units.

This and further objects of the invention will be apparent to the expert of the art on reading the description given hereinafter.

Such filter unit comprises a casing (2) containing filter tubes (5) suspended from a filter-support surface (6), an inlet pipe (10) associated with said casing (2) at the upstream side of said surface (6) where said tubes (5) extend, an outlet suction pipe (11) associated with said casing (2) at the other side of said surface (6), at least two chambers (13, 13') separated by sealing diaphragms (14) downstream of said surface (6) and each independently connected to said suction pipe (11), and shutoff valves (18, 18') provided between said outlet suction pipe (11) and each respective chamber (13, 13') to control the air flow through said filter tubes (5), characterized in that for each part of the surface (6) associated with each chamber (13, 13') shaker means (7) are provided comprising a pipe segment suspended from said surface (6), an inlet pipe (9) at the upstream side of said support surface (6) being connected with the bottom end of said pipe segment to feed compressed air therein and to cause a ball (8) contained within the pipe segment to move energetically therein, and a discharge pipe (20) extending through a respective chamber (13, 13') and connecting the top end of said pipe segment to the outside of the casing (2) being also provided, said shaker means (7) being operable only when the corresponding valve (18, 18') is closed.

The invention is illustrated schematically by way of example in the single accompanying figure.

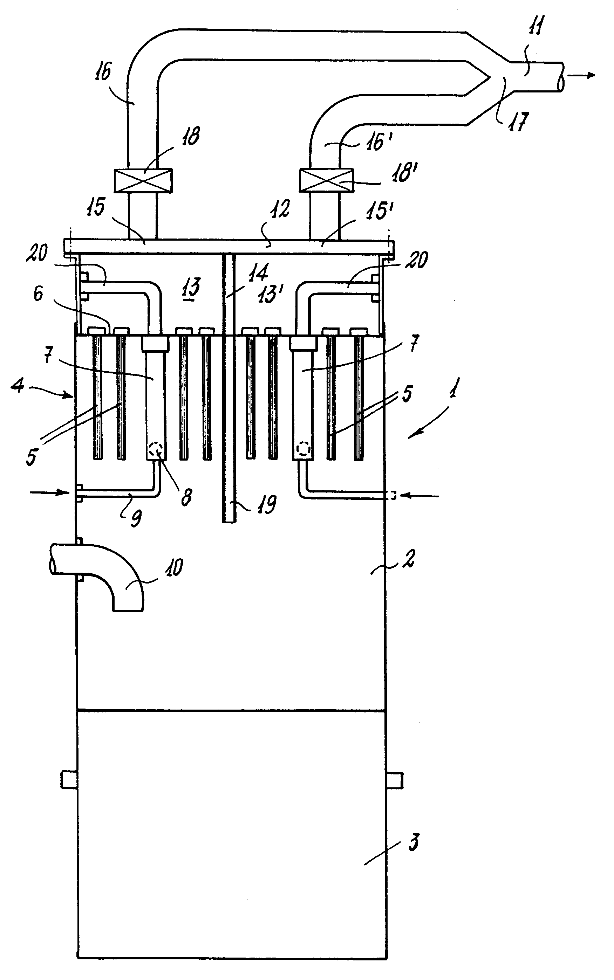

With reference to said figure the filter unit, indicated overall by 1, is of the type comprising a casing 2 of circular cross-section associated with a dust container 3, said casing housing a filter unit indicated overall by 4 and conventionally consisting of a plurality of vertically arranged filter tubes 5 suspended from a surface 6 carrying shaker means 7 of ball type. In the figure the shaker means 7 each comprise a ball 8 caused to move energetically by compressed air fed through the pipe 9.

A suction pipe 10 is provided in the lateral surface of the lower part of the casing 2. Draw-off from the casing 2 is provided by a conventional turbine (not shown) associated with a pipe 11.

According to the invention, to satisfy the requirement of providing a high efficiency filter unit of reduced filtering surface, the interior of the casing 2 between the filtering surface 6 and the upper cover 12 is in the form of two separate compartments 13, 13' separated by a sealing diaphragm 14, each chamber comprising an outlet aperture 15, 15' to which there is connected a tube branch 16, 16 which at 17 meets the turbine suction pipe 11, the cross-sections of the branches 16 and 16' being equal to the cross-sections of the pipes 11 and 10.

The branches 16 and 16' are each provided with their own valve 18, 18' and the casing 2 comprises a vertical dividing wall 19 interposed between the filters 5 in a position corresponding to the diaphragm 14.

The shaker means 7 conventionally comprise discharge pipes 20 to the outside.

The use of sealed chambers 13 and 13', the dividing wall 19 and the separate branches 16, 16' independently closable by the valves 18 and 18' enables the efficiency of the filter unit 1 to be raised while maintaining very small filtering surfaces.

In this respect during operation, and assuming the valve 18' to be closed, as the cross-sections of the pipes 11 and 10 are equal to each other and to the cross-section of the branches 16 and 16', the use of the described structure means that the passage cross-section of that surface 6 relative to the chamber 13 can be kept equal to the cross-section of the remaining pipes as the filtering surface relative to said chamber 13 is kept permanently clean because of the facility for alternating draw-off via the chamber 13 or via the chamber 13' as required, by simply closing one or other of the branches 16, 16'. The cleaning of the one or the other chamber is effected by operating the shaker means 7 during the exclusion of the one or the other chamber.

## Claims

1. A filter unit comprising a casing (2) containing filter tubes (5) suspended from a filter-support surface (6), an inlet pipe (10) associated with said casing (2) at the upstream side of said surface (6) where said tubes (5) extend, an outlet suction pipe (11) associated with said casing (2) at the other side of said surface (6), at least two chambers (13, 13') separated by sealing diaphragms (14) downstream of said surface (6) and each independently connected to said suction pipe (11), and shutoff valves (18, 18') provided between said outlet suction pipe (11) and each respective chamber (13, 13') to control the air flow through said filter tubes (5), characterized in that for each part of the surface (6) associated with each chamber (13, 13') shaker means (7) are provided comprising a pipe segment suspended from said surface (6), an inlet pipe (9) at the upstream side of said support surface (6) being connected with the bottom end of said pipe segment to feed compressed air therein and to cause a ball (8) contained within the pipe segment to move energetically therein, and a discharge pipe (20) extending through a respective chamber (13, 13') and connecting the top end of said pipe segment to the outside of the casing (2) being also provided, said shaker means (7) being operable only when the corresponding valve (18, 18') is closed.

2. A filter unit according to claim 1, characterised in that each chamber (13, 13') is connected to said suction pipe (11) by a branch (16, 16'), each branch comprising its own shutoff valve (18, 18').

3. A filter unit according to claims 1 and 2, characterised in that said casing (2) comprises, vertically arranged and suspended from said surface (6), a number of dividing walls (19) equal to the number of sealing diaphragms (14) delimiting said chambers (13, 13').

## Patentansprüche

1. Filtereinheit, umfassend ein Gehäuse (2), das Filterrohre bzw. -schläuche (5) enthält, die von einer Filterhaltefiäche (6) her aufgehängt sind, ein Einlaßrohr (10), das mit dem Gehäuse (2) an der stromaufwärtigen Seite der Fläche (6), wo sich die Rohre bzw. Schläuche (5) erstrecken, verbunden ist, ein Auslaßsaugrohr (11), das mit dem Gehäuse (2) an der anderen Seite der Fläche (6) verbunden ist, wenigstens zwei durch Abdichtungsscheidewände (14) getrennte Kammern (13, 13') stromabwärts von der Fläche (6) und jede unabhängig mit dem Saugrohr (11) verbunden, und Absperrventile (18, 18'), die zwischen dem Auslaßsaugrohr (11) und jeder jeweiligen Kammer (13, 13') zum Steuern der Luftströmung durch die Filterrohre bzw. -schläuche (5) vorgesehen sind, dadurch **gekennzeichnet,** daß für jeden Teil der Fläche (6), der mit einer jeweiligen Kammer (13, 13') verbunden ist, Rüttlermittel (7) vorgesehen sind, umfassend einen Rohrabschnitt, der von der Fläche (6) her aufgehängt ist, ein Einlaßrohr (9) an der stromaufwärtigen Seite der Haltefläche (6), das mit dem unteren Ende des Rohrabschnitts verbunden ist, um Druckiuft darein zuzuführen und zu bewirken, daß sich eine Kugel (8), die innerhalb des Rohrabschnitts enthalten ist, energetisch darin bewegt, und ein Entladungsrohr (20), das sich durch die jeweilige Kammer (13, 13') erstreckt und das obere Ende des Rohrabschnitts mit dem Äußeren des Gehäuses (2) verbindet, auch vorgesehen ist, wobei die Rüttlermittel (7) nur betreibbar sind, wenn das entsprechende Ventil (18, 18') geschlossen ist.

2. Filtereinheit gemäß Anspruch 1, dadurch **gekennzeichnet,** daß jede Kammer (13, 13') mit dem Saugrohr (11) mittels einer Abzweigung (16, 16') verbunden ist, wobei jede Abzweigung ihr eigenes Absperrventil (18, 18') enthält.

3. Filtereinheit gemäß den Ansprüchen 1 und 2, dadurch **gekennzeichnet,** daß das Gehäuse (2) vertikal angeordnet und von der Fläche (6) her aufgehängt eine Anzahl von Unterteilungswänden (19) gleich der Anzahl von Abdichtungsscheidewänden (14), welche die Kammern (13, 13') begrenzen, umfaßt.

## Revendications

1. Système filtrant comportant un boîtier (2) qui contient des tubes filtrants (5) suspendus à une surface (6) de support des filtres, un tuyau d'entrée (10) associé audit boîtier (2) en amont de ladite surface (6) où s'étendent les tuyaux (5), un tuyau d'aspiration de sortie (11) associé audit boîtier (2) de l'autre côté de la surface (6), au moins deux chambres (13, 13') séparées par des membranes étanches (14) en aval de la surface (6), chacune etant reliée de manière indépendante audit tuyau d'aspiration (11), et des vannes de fermeture (18, 18') disposées entre le tuyau d'aspiration de sortie (11) et chacune des chambres (13, 13') pour le contrôle du flux d'air à travers les tubes filtrants (5),
caractérisé en ce que, pour chaque partie de la surface (6) associée à chaque chambre (13, 13') sont prévus des moyens d'agitation (7) qui comprennent un segment de tuyau suspendu à ladite surface (6), un tuyau d'entrée (9) disposé en amont de la surface de support (6) et relié à l'extrémité inférieure dudit segment de tuyau pour l'alimenter en air comprimé et provoquer le mouvement énergique d'une balle (8) contenue dans le segment de tuyau, et un tuyau d'évacuation (20) qui s'étend respectivement à travers l'une des chambres (13, 13') et relie l'extrémité supérieure dudit segment de tuyau à l'extérieur du boîtier (2), lesdits moyens d'agitation (7) pouvant fonctionner uniquement lorsque la vanne correspondante (18, 18') est fermée.

2. Système filtrant selon la revendication 1,
caractérisé en ce que chaque chambre (13, 13') est reliée au tuyau d'aspiration (11) par une branche (16, 16'), chaque branche comprenant sa propre vanne de fermeture (18, 18').

3. Système filtrant selon les revendications 1 et 2,
caractérisé en ce que ledit boîtier (2) comprend, disposées verticalement et suspendues à la surface (6), des cloisons (19) en nombre égal à celui des membranes étanches (14) qui délimitent les chambres (13, 13').
